# EUROPEAN PATENT APPLICATION

(11) **EP 1 266 997 A1**
(43) Date of publication of application: **18.12.2002**
(21) Application number: 01949015.0
(22) Date of filing: 01.02.2001
(51) Int. Cl.: D21H 27/30, D21H 13/14

(54) **HEAT-SEAL PAPER HAVING AIR PERMEABILITY**

(30) Priority: 03.02.2000 JP 2000025980
(71) Applicant: Mitsui Chemicals, Inc., Tokyo 100-6070 (JP)
(72) Inventor: NAKAGAWA, Norihiko, c/o MITSUI CHEMICALS, INC., Ichihara-shi, Chiba 299-0108 (JP); KOUNO, Yukio, c/o MITSUI CHEMICALS, INC., Ichihara-shi, Chiba 299-0108 (JP); NAKAMARU, Makoto, c/o MITSUI CHEMICALS, INC., Ichihara-shi, Chiba 299-0108 (JP)
(74) Representative: Cresswell, Thomas Anthony
(86) International application number: JP0100709
(87) International publication number: WO01057316

(57) **Abstract**

A laminate integrated by firmly jointing a heat-seal layer in web form made from a mixture of synthetic pulp having a branched configuration and synthetic short fiber to a substrate layer made from natural fiber. The synthetic pulp is made from a resin composition comprised of ethylene-α,β-unsaturated carboxylic acid copolymer and polyethylene. This laminate has a high degree of air permeability and exhibits a high heat-seal strength and good hot tack even at a temperature of 130°C. On account of said properties it is adequately used as heat-seal paper suited for filter use, in particular raw material paper for tea bags.

## Description

### Technical Field of the Invention

The present invention relates to a heat-seal paper having air permeability, and more particularly relates to a heat-seal paper suitable for the manufacture of tea bags or bags for packaging sterilized apparatus and tools, desiccators, etc.

### Background of the Invention

The heat-seal paper conventionally used as the raw material paper for tea bags, etc. used to be made from some type of mixed pulp composed of natural fiber and synthetic fiber. Such paper often impaired productivity of automatic packaging machine due to adhesion of molten synthetic fibers contained in it to the hot plate when fed to the heat-sealing section of the packaging machine. Coming into predominant use in the industry these days is such double layered heat-seal paper constructed of a heat-seal layer principally composed of synthetic fiber and a substrate layer principally composed of natural fiber, the former being laminated on the latter.

This double layered type heat-seal paper is required to possess air permeability, to have its heat-seal layer firmly jointed to the substrate layer, and to have its heat-seal layer retain good heat-sealability, hot tack, etc.

Meanwhile, the synthetic fiber used for the conventional heat-seal layer is polyethylene fiber, polypropylene fiber, polyester fiber, or conjugate fiber thereof. Heat-seal paper made from said fibers has good air permeability, but is said to impart only too low interlayer bond strength between the heat-seal layer and the substrate layer. What is pointed out as the factor to bring about low interlayer bond strength is that said fiber makes it difficult for developing intertwists involving fibers in the substrate layer because it is in the rod shape and, therefore, is destitute of ramification.

As the automatic packaging machines have come to acquire very high operating speeds recently, the industry is demanding in particular higher degrees of heat-sealability and hot tack at low sealing temperatures. Said fibers conventionally put in use for the heat-seal layer have not necessarily had sufficient heat-sealability and hot tack at low sealing temperatures, although they have at high sealing temperatures.

Japanese Patent Publication No. 1969-16801 (corresponding foreign patent: German Patent No.1546330: British Patent No.1091073) discloses a fiber made from vinyl acetate-vinyl chloride copolymer (trade name "Vinyon"). There appears a description therein that said fiber can be used as a raw material for heat-seal paper to be used in the manufacture of tea bags. Although said heat-seal paper has good air permeability, heat-sealability, etc., it is faced with demands for'further improved product qualities so that it would not give rise to generation of dioxines and other harmful substances when incinerated as wastes.

### Description of the Invention

Accordingly it is an object of the present invention to provide a heat-seal paper which has a heal seal layer and a substrate layer firmly jointed to each other and retains good air permeability.

It is the second object of the present invention to provide a heat-seal paper which imparts stable and good heat-sealability and hot tack over a wide range of heat-sealing temperature range extending from low temperatures to high temperatures.

It is the third object of the present invention to provide a heat-seal paper which is few fear of generation of dioxines and other harmful substances when incinerated as wastes, and thus contributes to protection of the environments.

At large, the present invention relates to a heat-seal paper whose technical details are as enumerated in items 1 to 24 as follows:
1. A heat-seal paper having air permeability, which comprises a laminated body integrating a heat-seal layer (A) principally comprised of a synthetic fiber having a branched configuration and a substrate layer (B) principally comprised of a natural fiber.
2. A heat-seal paper having air permeability according to item 1, wherein said synthetic fiber having the branched configuration is a polyolefin synthetic pulp.
3. A heat-seal paper having air permeability according to item 2, wherein said polyolefin synthetic pulp has an average fiber length of 0.1 to 10 mm and a freeness of 700 cc or less.
4. A heat-seal paper having air permeability according to item 2 or 3, wherein said polyolefin synthetic pulp is constructed of a resin composition comprised of 50 to 100% by weight of an ethylene-α,β-unsaturated carboxylic acid copolymer containing 1 to 20% by weight of an α,β-unsaturated carboxylic acid and 0 to 50% by weight of a polyethylene resin.
5. A heat-seal paper having air permeability according to either one of items 1 to 4, wherein said heat-seal layer (A) is comprised of 50 to 100% by weight of the polyolefin synthetic pulp and 0 to 50% by weight of at least one type of fiber selected from the group consisting of polyethylene fiber, polypropylene fiber, polyester fiber and conjugate fiber thereof.
6. A heat-seal paper having air permeability according to either one of items 1 to 4, wherein said heat-seal layer (A) is comprised of 50 to 90% by weight of the polyolefin synthetic pulp and 10 to 50% by weight of at least one type selected from the group consisting of polyethylene fiber, polypropylene fiber, polyester fiber and conjugate fiber thereof.
7. A heat-seal paper having air permeability, which is a laminated body integrating a heat-seal layer (A) and a substrate layer (B) principally containing natural fiber wherein said heat-seal layer (A) is comprised of 1 to 99% by weight of a polyolefin synthetic pulp having a branched configuration and an average fiber length of 0.1 to 10 mm and 1 to 99% by weight of a synthetic fiber having a fineness of 0.1 to 10 deniers and an average fiber length of 0.1 to 30 mm, and said synthetic pulp is constructed of a resin composition comprised of 50 to 99% by weight of an ethylene-α,β-unsaturated carboxylic acid copolymer containing 1 to 20% by weight of an α,β-unsaturated carboxylic acid and 1 to 50% by weight of a polyethylene resin.
8. A heat-seal paper having air permeability according to item 7, wherein said heat-seal layer (A) is comprised of 50 to 99% by weight of the polyolefin synthetic pulp and 1 to 50% by weight of the synthetic fiber.
9. A heat-seal paper having air permeability according to item 7, wherein said heat-seal layer (A) is comprised of 50 to 90% by weight of the polyolefin synthetic pulp and 10 to 50% by weight of the synthetic fiber.
10. A heat-seal paper having air permeability according to either one of items 7 to 9, wherein said synthetic fiber is at least one type of fiber selected from the group consisting of polyethylene fiber, polypropylene fiber, polyester fiber and conjugate fiber thereof.
11. A heat-seal paper having air permeability according to either one of items 7 to 10, wherein said ethylene-α,β-unsaturated carboxylic acid copolymer is an ethylene-acrylic acid copolymer or an ethylene-methacrylic acid copolymer.
12. A heat-seal paper having air permeability according to either one of items 7 to 11, wherein said polyethylene resin has a density of 0.941 to 0.970 -(g/cm³) and a melt flow rate of 0.1 to 100 (g/10 min.).
13. A heat-seal paper having air permeability according to either one of items 7 to 12, wherein said polyolefin synthetic pulp has a freeness of 700 cc or less.
14. A heat-seal paper having air permeability according to either one of items 7 to 13, wherein said heat-seal layer (A) has a thickness corresponding to a grammage of 1 to 10 (g/m²).
15. A heat-seal paper having air permeability according to either one of items 7 to 14, wherein said substrate layer (B) has a thickness corresponding to a grammage of 10 to 30 (g/m²).
16. A heat-seal paper having air permeability according to either one of items 7 to 15, wherein said substrate layer (B) is composed of an abaca pulp.
17. A heat-seal paper having air permeability according to either one of items 7 to 16, wherein said laminated body is comprised of 15 to 30% by weight of the heat-seal layer (A) and 70 to 85% by weight of the substrate layer (B).
18. A heat-seal paper having air permeability according to either one of items 7 to 17, wherein said laminated body has a thickness corresponding to a grammage of 11 to 40 (g/m²).
19. A heat-seal paper having air permeability according to either one of items 7 to 18, wherein said laminated body has a Frazier air permeability of 100 to 300 (cm³/cm²/s).
20. A heat-seal paper having air permeability according to either one of items 7 to 19, wherein said laminated body has a heat-seal strength at a temperature of 130°C of 100 to 300 (g/15 mm).
21. A heat-seal paper having air permeability according to either one of items 7 to 20, wherein said laminated body has a hot tack as represented by a peel distance at a temperature of 130°C is 1 to 100 mm.
22. A heat-seal paper having air permeability according to either one of items 7 to 21, wherein said laminated body is a filter bag paper.
23. A heat-seal paper having air permeability according to either one of items 7 to 21, wherein said laminated body is a tea bag paper.
24. A heat-seal paper having air permeability according to either one of items 7 to 23, wherein the heat-seal layer (A) and the substrate layer (B) constituting said laminated body do not substantially contain any halogen atom.

In other words, the present invention relates to a heat-seal paper having air permeability, which comprises a laminated body integrating a heat-seal layer (A) principally comprised of a synthetic fiber having a branched configuration and a substrate layer (B) principally comprised of a natural fiber.

It is preferable that said synthetic fiber having the branched configuration is a polyolefin synthetic pulp. It is particularly preferable that it is constructed of a resin composition comprised of 50 to 100% by weight of an ethylene- α,β-unsaturated carboxylic acid copolymer containing 1 to 20% by weight of an α,β-unsaturated carboxylic acid and 0 to 50% by weight of a polyethylene resin.

It is also preferable that said heat-seal layer (A) is composed of 50 to 100% by weight, and preferably 50 to 90% by weight of the polyolefin synthetic pulp and 0 to 50% by weight, and preferably 10 to 50% by weight of at least one type of fiber selected from the group consisting of polyethylene fiber, polypropylene fiber, polyester fiber and conjugate fiber thereof.

The present invention relates to a heat-seal paper having air permeability, which is a laminated body integrating a heat-seal layer (A) and a substrate layer (B) principally containing a natural fiber, wherein said heat-seal layer (A) is comprised of 1 to 99% by weight of a polyolefin synthetic pulp having a branched configuration and an average fiber length of 0.1 to 10 mm and 1 to 99% by weight of a synthetic fiber having a fineness of 0.1 to 10 deniers and an average fiber length of 0.1 to 30 mm, and said synthetic pulp is comprised of 50 to 99% by weight of an ethylene- α,β-unsaturated carboxylic acid copolymer containing 1 to 20% by weight of an α,β-unsaturated carboxylic acid and 1 to 50% by weight of a polyethylene resin.

It is furthermore preferable that said heat-seal layer (A) is comprised of 50 to 99% by weight, and more preferably 50 to 90% by weight of the polyolefin synthetic pulp and 1 to 50% by weight, and more preferably 10 to 50% by weight of the synthetic fiber.

For said heat-seal paper, it is preferable that said synthetic fiber is at least one type of fiber selected from the group consisting of polyethylene fiber, polypropylene fiber, polyester fiber and conjugate fiber thereof.

It is preferable that the ethylene-α,β-unsaturated carboxylic acid copolymer constituting polyolefin synthetic pulp is an ethylene-acrylic acid copolymer or an ethylene-methacrylic acid copolymer, wherein the polyethylene resin is a high density polyethylene having a density of 0.941 to 0.970 (g/cm³) and a melt flow rate of 0.1 to 100 (g/10 min.).

The weight ratio of each layer constituting the laminated body is preferably 15 to 30% by weight for the heat-seal layer (A) and 70 to 85% by weight for the substrate layer.

It is preferable that the breakdown by thickness of said laminated body is adjusted to 1 to 10 (g/m²) for the heat-seal layer (A), 10 to 30 (g/m²) for the substrate layer (B) and 11 to 40 (g/m²) as a whole, respectively, in terms of grammage.

The laminated body having said structure is suitable for the use as a heat-seal paper insofar as its Frazier air permeability is 100 to 300 (cm³/cm²/s), its heat-seal strength is 100 to 300 (g/15 mm) at a temperature of 130°C, and its hot tack at a temperature of 130°C as expressed by the peel distance is 1 to 100 mm.

Since the heat-seal paper of the present invention exhibits stable and good heat sealability and hot tack over a wide temperature range extending from low temperatures to high temperatures, demonstrating high effects particularly at low temperatures, and at the same time possesses good air permeability and strong interlayer bond strength between the heat-seal layer and the substrate layer, it may be utilized as filter bag paper, in particular as the raw material paper for tea bags.

### Brief Description of Drawings

Figure 1 is a micrograph depicting a configuration of the synthetic pulp used in the present invention.
Figure 2 is a micrograph depicting a configuration of the synthetic fiber used in the present invention.
Figure 3 is a micrograph depicting a configuration of the heat-seal layer pertinent to the present invention.

### Description of the Preferred Embodiments

A heat-seal paper having air permeability of the present invention is a laminated body which is comprised of basically a heat-seal layer and a substrate layer, each of which will be explained in detail as follows:

### Heat-seal Layer (A)

A heat-seal layer (A) constitutes a unit sheet contained of a blended fibrous layer comprising a polyolefin synthetic pulp and a synthetic fiber which as a whole does not readily get separated due to the presence of branches in the synthetic pulp that are intertwisted with the synthetic fibers.

### (1) Polyolefin synthetic pulp

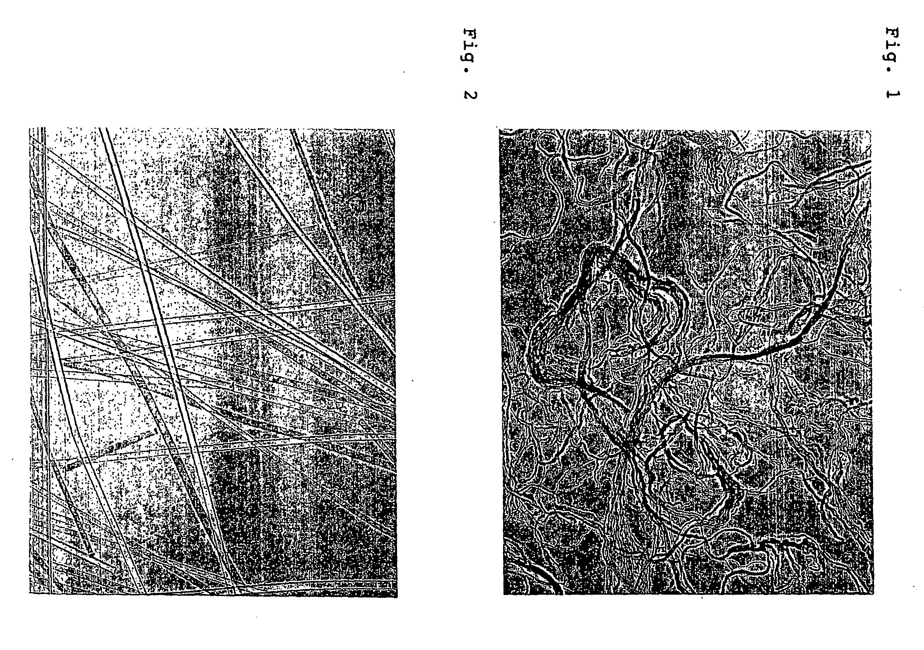

The polyolefin synthetic pulp is a pulp-like material formed from polyolefin resin into short fiber having innumerous branches which has an average fiber length of 0.1 to 10 mm, and preferably 0.5 to 5 mm. Innumerous branches are located on the surfaces of such fibers. Figure 1 is a micrograph depicting a configuration of the synthetic pulp. The micrograph shows that fine short fibers get ramified from the surface of a thick short fiber as is normally the case with a natural pulp.

While such synthetic pulp can be manufactured from various types of polyolefin resin or a resin composition, it is preferable that it be formed from an ethylene-α,β-unsaturated carboxylic acid copolymer(a) in consideration of such conditions that it may be readily formed into a pulp-like material and possesses good heat-sealability and hot tack, and it is particularly preferably that it be formed from a resin composition comprised of (a) and polyethylene resin (b).

### (2) Ethylene-α,β-unsaturated carboxylic acid copolymer

The Ethylene-α,β-unsaturated carboxylic acid copolymer is a copolymer derived by copolymerizing ethylene and an α,β-unsaturated carboxylic acid wherein α,β-unsaturated carboxylic acid unit is contained by 1 to 20% by weight, preferably 3 to 15% by weight, and more preferably 5 to 10% by weight. Insofar as the α,β-unsaturated carboxylic acid content is within said ranges, the synthetic pulp containing said copolymer imparts high levels of heat-sealability and hot tack over a wide temperature range extending from low temperatures to high temperatures and possesses sufficient freeness required of a wet process paper.

As examples of the α,β-unsaturated carboxylic acid, the following compounds can be cited. Namely, acrylic acid, methacrylic acid, maleic acid, maleic anhydride, fumaric acid, itaconic acid, crotonic acid, himic anhydride, etc. Included in the category of α,β-unsaturated carboxylic acid for the present invention are the following. Namely, α,β-unsaturated carboxylic acid esters, which are derivatives of α,β-unsaturated carboxylic acid, i.e., methyl acrylate, methyl methacrylate, monomethyl maleate, etc. Particularly preferred among them is acrylic acid or methacrylic acid, which is a monovalent acid.

Said ethylene-α,β-unsaturated carboxylic acid copolymer may be a random copolymer of ethylene and the α,β-unsaturated carboxylic acid, or a graft copolymer derived by graft copolymerizing the α,β-unsaturated carboxylic acid to polyethylene. Particular preferred among them is the random copolymer manufactured by directly copolymerizing ethylene with the α,β-unsaturated carboxylic acid. This type is conventionally manufactured according to a high-pressure radical polymerization process. In executing such copolymerization, the α,β-unsaturated carboxylic acids exemplified above may be used alone or in a combination of two or more types.

The following copolymers can be cited as examples of the ethylene- α,β -unsaturated carboxylic acid copolymer. Namely, ethylene-acrylic acid copolymer, ethylene-methacrylic acid copolymer, ethylene-methacrylic acid-methyl methacrylate terpolymer, and ethylene-acrylic acid-methyl methacrylate terpolymer.

The ethylene-α,β-unsaturated carboxylic acid copolymer usable for the present invention may be so-called ionomer resin which is derived by partially neutralizing at least part of the carboxylic groups contained in the ethylene-α,β-unsaturated carboxylic acid copolymer with such metal ion as Na⁺, K⁺, Zn⁺⁺, Ca⁺⁺, Mg⁺⁺, etc.

### (3) Polyethylene resin

Polyethylene resin may be an ethylene homopolymer or an ethylene-α-olefin copolymer. It is usable over a wide range extending from a low density grade to a high density grade.

It is preferable that the ethylene homopolymer is in the ranges of 0.900 to 0.970 (g/cm³) for a density, and preferably 0.920 to 0.970 (g/cm³); 0.1 to 100 (g/10 mm.), and preferably 1 to 20 (g/10 min.) for a melt flow rate (MFR) as determined at a temperature of 190°C and under a load, of 2.16 kg according to ASTM D-1238. Insofar as the ethylene homopolymer having the density and the MFR falling within said ranges is used, a synthetic pulp of highly branched and well-intertwisted pulp fibers may be obtained. Among different grades of polyethylene, high density polyethylene having the density of 0.941 to 0.970 (g/cm³) is particularly preferred.

In the case of the ethylene-α-olefin copolymer, what is preferred is a crystalline polymer falling in the ranges of 90 to 99 mol.%, and preferably 95 to 99 mol.% for ethylene content and 1 to 10 mol.%, and preferably 1 to 5 mol.% for α-olefin content. Preferred for such α-olefin are those olefins having 3 to 20 carbon atoms. Some examples thereof are propylene, 1-butene, 1-pentene, 3-methyl-1-butene, 4-methyl-1-pentene, 1-hexene, 1-octene, 1-decene, 1-dodecene, and 1-tetradecene.

It is preferable that such ethylene-α-olefin copolymer has a density of 0.900 to 0.940 (g/cm³), and preferably 0.920 to 0.940 (g/cm³) and a melt flow rate (MFR) as determined at a temperature of 190°C and under a load of 2.16 kg according to ASTM D-1238 of 0.1 to 100 (g/10 min.), and preferably 0.5 to 50 (g/10 min.). Insofar as the ethylene-α-olefin copolymer to be used has the density and the MFR falling in said ranges, synthetic pulp obtained from it exhibits highly ramified pulp fiber and favorable intertwists.

Particularly preferred among such ethylene-α-olefin copolymers are ethylene-1-butene copolymer, ethylene-4-methyl-1-pentene copolymer and ethylene-1-hexene copolymer having the density of 0.920 to 0.940 (g/cm³) and the MFR of 1 to 10 (g/10 min.).

These ethylene homopolymer and ethylene- α -olefin copolymers can be manufactured by polymerizing ethylene, and insofar as necessary including α-olefin monomer in the reaction system in the presence of Ziegler-Natta catalyst or a metallocene catalyst according to such conventional polymerization process as the gas phase process, the bulk process, the slurry process, and the solution process.

### (4) Manufacture of synthetic pulp

The synthetic pulp usable for the present invention is formed into pulp-like material from a resin composition preferably comprising the ethylene- α,β-unsaturated carboxylic acid copolymer (a) and the polyethylene resin (b). The blending ratio (%) of the raw materials (a) and (b) are 50 to 100% by weight, preferably 50 to 99% by weight, and more preferably 50 to 90% by weight, and furthermore preferably 60 to 80% by weight for the raw material (a) and 0 to 50% by weight, preferably 1 to 50% by weight, more preferably 10 to 50% by weight, and furthermore preferably 20 to 40% by weight for the raw material (b), wherein the sum of the raw materials (a) and (b) is to be 100% by weight.

Insofar as the blending ratio (%) of the raw materials (a) and (b) falls within said ranges, such synthetic pulp may be obtained that will give excellent freeness when it is made into paper according to the wet process, and also such synthetic pulp may be obtained as will impart stable and good heat-sealability and hot tack over a wide sealing temperature range extending from low temperatures to high temperatures.

For manufacturing synthetic pulp from said raw material resin composition, conventional processes can be employed. Such processes are explained in detail in Encyclopedia of Chemical Technology, 3^{rd} ed., Vol. 19, p.p. 420 to 425. For instance, there is introduced a process which comprises cutting melt-spun fiber into short elements, and then beating the resulting material; and another process which comprises beating materials obtained by melt-flash spinning or emulsion-flash spinning. In the pulp preparation process, various additives, such as antioxidants, antistatic agents, UV stabilizers, and pigments may be added insofar as addition of such additives does not go counter to the object of the present invention.

It is preferable that the synthetic pulp used in the present invention has an average fiber length of 0.1 to 10 mm, and preferably 0.5 to 5 mm, and has a freeness conforming to Canadian Standard Freeness (CSF) of 700 cc or less. Preferred as the process for manufacturing such preferable synthetic pulp is the process of flash spinning a resin solution or an emulsion. Particularly preferred is the emulsion-flash spinning process in which a polyvinyl alcohol (PVA) is utilized as the hydrophilic agent, since this process gives a pulp having such fiber configuration that promotes formation of intertwists among synthetic fibers in the heat-seal layer and natural fibers in the substrate layer. The preferable amount of the PVA to be added is 0.01 to 10% by weight to the total quantity of the synthetic pulp including the PVA.

### (5) Formation of the heat-seal layer (A)

The heat-seal layer (A) is a fibrous layer comprised of the polyolefin synthetic pulp and the synthetic fiber.

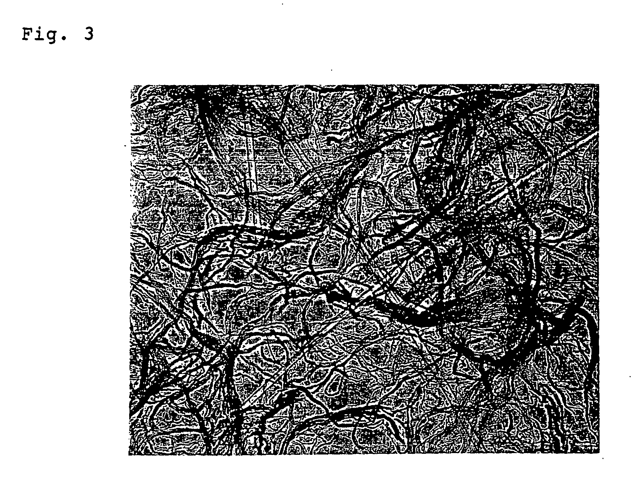

The synthetic fiber for this use has a weight fineness of 0.1 to 10 deniers, and preferably 0.5 to 8 deniers and an average fiber length of 0.1 to 30 mm, and preferably 0.5 to 25 mm, which is conventionally categorized as short fiber. Such synthetic fiber may have a round cross-section or oblong cross-section, and furthermore a polygonal cross-section. It may also have branches on its surface. Figure 2 is a micrograph depicting an example of its configuration. It shows rod-shaped polypropylene short fiber having a round cross-section and smooth surfaces.

The usable types of synthetic fiber are fibers having various qualities such as polyolefin fiber, polyester fiber, polyamide fiber, etc. Particularly preferred among them are polyethylene fiber, polypropylene fiber, polyester fiber, or conjugate fibers thereof. The structure of the conjugate fiber may be of a sheath & core construction or of a side-by-side construction. For example, the conjugate fibers of the sheath & core construction constructed of a polyethylene sheath and a polypropylene core is usable.

It is preferable that the blending ratio is 1 to 99% by weight, and preferably 50 to 99% by weight, and more preferably 50 to 90% by weight, of the polyolefin synthetic pulp and 1 to 99% by weight, preferably 1 to 50% by weight, and more preferably 10 to 50% by weight of the synthetic fiber, so that the total quantity of the two becomes 100% by weight. A blending ratio falling in said ranges is advantageous in that the heat-seal layer exhibits high heat-sealability and hot tack over a wide heat-sealing temperature range extending from low temperatures to high temperatures, and thus the bond to the substrate layer is made stronger.

As for the method of blending the synthetic pulp and the synthetic fiber, blending can be accomplished without any difficulty by mechanically mixing the two during the paper making step. As specific methods, conventional beating/refining machine such as a pulper and a beater can be utilized. A heat-seal layer haying a sufficient heat-seal strength and hot tack may be formed by adjusting the thickness of dried web to a grammage, or basis weight (weight per unit area) of 1 to 20 (g/m²), and preferably 1 to 10 (g/m²), and thus the obtained heat-seal layer exhibits a sufficient air permeability.

Figure 3 is a micrograph depicting an example of the heat-seal layer. The heat-seal layer shown in the photograph is a fibrous layer formed by mechanically mixing 70% by weight of the synthetic pulp and 30% by weight of a polypropylene short fiber. It may be clearly seen from this micrograph that synthetic pulp having innumerous branches on its surfaces intertwisted with rod-shaped polypropylene short fibers which have smooth surfaces.

### Heat-seal paper

### (1) Structure of the heat-seal paper

A laminated body obtained by laminating the heat-seal layer (A) on a substrate layer (B) so as to integrate them into a united body may be a double layered laminate of the (A)/(B) construction or a triple layered laminate of the (A)/(B)/(A) construction. Such laminate can be utilized as a heat-seal paper. It is typically utilized extensively in the form of the double layered laminate of the (A)/(B) construction.

The substrate layer (B) is a fibrous layer principally comprised of a natural fiber and may additionally contain small amounts of synthetic fiber or synthetic pulp or the like. As the natural fiber for this use, such natural fiber as is utilized for the conventional tea bags or sterilized paper are usable. A few examples thereof are abaca pulp, NBKP (needle bleached kraft pulp), and LBKP (leaf bleached kraft pulp). Particularly preferred among them is abaca pulp in view of its air permeability and strength. The thickness of the substrate layer varies with the intended use of the heat-seal paper. Its suitable grammage is in the range of 10 to 50 (g/m²), and preferably of 10 to 30 (g/m²).

### (2) Manufacture of the heat-seal paper

The heat-seal paper can be manufactured according to a process which comprises laminating the heat-seal layer (A) on at least one side of the substrate layer (B) and thereupon firmly integrating the two layers into a united body by heat treatment.

A detailed explanation is furnished as follows with reference to an example. The substrate layer and the heat-seal layer are individually formed using a sheet machine as separate wet webs and while the two layers are in the wet state, the heat-seal layer is stacked onto at least one side of the substrate layer, and the stack thus prepared is dried at a temperature of 40 to 110°C using a heating device such as a hot oven or a hot roll, and thereupon the resulting sheet is subjected to heat treatment at a temperature of 130 to 200°C so as to be made into the heat-seal paper. In the course of said operation, the heat-seal layer (A) and the substrate layer (B) are bonded to each other firmly to have a high interlayer bond strength as innumerous branches of synthetic pulp situated on the surface of the heat-seal layer are firmly bonded to the fibers constituting the substrate layer.

The weight ratio of each layer is 15 to 30% by weight, and preferably 15 to 25% by weight, of the heat-seal layer (A) and 70 to 85% by weight, and preferably 75 to 85% by weight of the substrate layer (B). And, the total thickness of the laminated body is so adjusted that it will correspond to a grammage of 11 to 40 (g/m²).

### (3) Properties of the heat-seal paper

It is preferable that an air permeability of the heat-seal paper having aforementioned structure is 100 to 300 (cm³/cm²/s), and preferably 100 to 200 (cm³/cm²/s) in Frazier air permeability as determined using Frazier-model air permeability testing apparatus which is prescribed in JIS L1004. The heat-seal paper having the air permeability falling in said ranges can be favorably used in various applications for the filter use.

A heat-seal strength of said heat-seal paper at a temperature of 130°C falls in the range of 100 to 300 (g/15 mm), and preferably 120 to 200 (g/15 mm). Insofar as the heat-seal strength of the heat-seal paper is within said ranges, such heat-seal paper exhibits sufficient bond strength and hence it is applicable to extensive uses.

The heat-seal strength is determined according to the following procedure. Namely, two sheets of heat-seal paper are stacked in such manner that their respective heat-seal layers will touch face-to-face each other. Thereupon a 10 mm-wide seal bar controlled to a temperature of 130°C is pressed from the substrate layer side under a pressure of 2 kg/cm² for 1 sec. After the heat-sealed area has been cooled to the room temperature, a specimen of a 15 mm width cut out from it is subjected to such test that its heat-sealed area is peeled at a crosshead speed of 100 mm/min. so that its peel strength (g/15 mm) is measured. The measured value is recorded as the heat-seal strength.

A hot tack of this heat-seal paper at a temperature of 130°C as expressed in terms of a peel distance is 1 to 100 mm, and preferably 1 to 70 mm. Insofar as the peel distance, which is an indicator of hot tack, is within said ranges, speedy and stable packaging operation may be continuously executed when this heat-seal paper is fed to an automatic filling/packaging machine designed to accomplish both a bag-making job using the heat-seal paper and a loading job by itself.

The peel distance adopted as the indicator of the hot tack was determined according to the following procedure. Namely, two sheets of heat-seal paper were stacked in such manner that their heat-seal layers would touch face-to-face each other, and thereupon the stacked layers were heat-sealed at a temperature of 130°C for 0.5 sec. under a pressure of 1 kg/cm², and immediately afterwards the peel distance of the heat-sealed area was measured under a load of 45 g.

As explained in the foregoing, the heat-seal paper of the present invention retains the high air permeability and the heat-seal layer and the substrate layer are jointed to each other to have a high interlayer bond strength. When it is fed to a heat-seal section in an automatic packaging machine, adhesion possibly caused in a molten state of the heat-seal paper to a hot plate in the machine may be prevented while it possesses good hot tack. For said reason, the heat-seal paper of the present invention may enhance stable productivity of bags, and bags having high heat-seal strength may be manufactured on a continuous basis.

### Examples

Next, the present invention is further described with reference to examples, but it should be construed that the invention is in no way limited to those examples.

The following two types of resin were made available so as to be used in examples.
(1) Resin 1: Ethylene-methacrylic acid copolymer
   MFR (at 190°C) = 1.5 (g/10 min.)
   Melting point = 99°C
   Methacrylic acid content = 9% by weight
(2) Resin 2: High density polyethylene
   MFR (at 190°C) = 13 (g/10 min.)
   Melting point = 135°C
   Density = 0.965 (g/cm³)

Properties of the manufactured synthetic pulp and heat-seal paper were measured according to the following test procedures.

### (1) Average fiber length (abb.: CFL)

The average fiber length per unit weight (mm) was determined using an automatic fiber length testing apparatus FS-200-model manufactured by Kajaani Co., Finland, and the measured value was reported as the average fiber length in the unit of millimeter.

### (2) Freeness (abb.: CSF)

Canadian Standard Freeness was determined in accordance with JIS P-8121, and the measured value was reported as the freeness value in the unit of cubic centimeter (cc).

### (3) Air permeability

Frazier air permeability was determined using a Frazier-model air permeability testing apparatus as prescribed in JIS L1004, and the measured value was reported as air permeability in the unit of cm³/cm²/s.

### (4) Heat-seal strength

Two sheets of double layered hand made sheet were stacked in such manner that their heat-seal layers will touch face-to-face each other and were heat-sealed for 1 sec under a pressure of 2 kg/cm² at temperatures of 130°C, 150°C, 170°C and 190°C, respectively, using a 10 mm-wide seal bar, and then left to stand until cooled to the room temperature. Next, 15 mm-wide specimens were cut out from the hand sheets heat-sealed at said respective temperatures, and the heat-sealed area of each specimen was peeled at the crosshead speed of 100 mm/min., and thus was measured its peel strength (g/15 mm). The measured value was reported as the heat-seal strength.

### (5) Hot tack

Two sheets of double-layered hand made sheet were stacked in such manner that their heat-seal layers will touch face-to-face each other and were heat-sealed for 0.5 sec under a pressure of 1 kg/cm² at temperatures of 130°C, 150°C, 170°C and 190°C, respectively, and immediately afterwards peel distance was measured by peeling the heat-sealed area under a load of 45 g. The measured peel distance was recorded as the basis on which to evaluate hot tack of the specimen.

### Example 1

Into an 80 liter autoclave equipped with a baffle plate and an agitator were charged 20 liters of n-hexane (23°C) , 20 liters of water (23°C), 700 g of ethylene-methacrylic acid copolymer (resin 1), 300 g of high density polyethylene (resin 2) and 20 g of polyvinyl alcohol (PVA) (saponification degree 99%; viscosity of 4% aqueous solution (20°C) 4.6 to 6.0 cps; manufactured by Japan Synthetic Chemical Industry Co.; trade name: Gosenol NL-05). The liquid mixture was heated to a temperature of 145°C with agitation using the agitator operated at 900 rounds per min. Agitation was continued for 30 min., while the mixed liquid temperature was maintained at a temperature of 145°C to finally obtain a suspension.

Next, the suspension was flashed into a drum maintained in a nitrogen atmosphere at a pressure of 400 mm Hg via a pipe connected to a nozzle of a 3 mm diameter and 20 mm length provided on the autoclave, and thus was obtained a fiber-like material. The fiber-like material was then converted into an aqueous slurry of a 10g/liter concentration in a receptacle, and the slurry was beaten/refined in a 12 inch-diameter disk-type refiner, and thus was obtained a pulp-like material.

Properties of the synthetic pulp thus obtained were an average fiber length (CFL) of 1.0 mm and a Canadian Standard Freeness (CSF) of 670 cc.

As the raw material for the substrate layer, abaca fiber was made available, and as the raw materials for the heat-seal layer, a mixture comprised of 70% by weight of said synthetic pulp and 30% by weight of polypropylene fiber (fineness: 2 deniers; fiber length: 5 mm; melting point: 165°C) were made available. Next, the substrate layer having a grammage of 14 g/m² and the heat-seal layer having a grammage of 4 g/m² were formed into wet webs using a manually operated laboratory-scale square paper making machine. The two sheets in the form of wet web were stacked and a double layered paper was produced. Thereupon, the double layered paper was dried for 5 min. at a temperature of 50°C using a hot air drier, and further underwent heat treatment for 1 min. at a temperature of 190°C.

The obtained double layered paper exhibited firm bond between the substrate layer and the heat-seal layer. This double layered paper was referred to tests for measuring its air permeability, heat-seal strength and hot tack. The test results are shown in Table 1.

### Example 2

A double layered paper was made available in the same manner as in Example 1 except that a polypropylene core & polyethylene sheath conjugate fiber (weight fineness: 2 deniers; fiber length: 5 mm) comprised of polyethylene (PE) (melting point: 130°C) for the sheath component and polypropylene (PP) (melting point: 165°C) for the core was used in place of the polypropylene fiber which was used in Example 1.

The obtained double layered paper exhibited firm bond between the substrate layer and the heat-seal layer. This double layered paper was referred to tests for measuring its air permeability, heat-seal strength and hot tack. The test results are shown alongside in Table 1.

### Comparative Example 1

A double layered paper was prepared in the same manner as in Example 1 except that polypropylene fiber alone was used as the fiber to constitute the heat-seal layer in place of the mixed fibers of synthetic pulp and polypropylene fiber which were used in Example 1.

The obtained double layered paper was referred to tests for measuring its air permeability, heat-seal strength and hot tack. The test results are shown alongside in Table 1.

### Comparative Example 2

A double layered paper was prepared in the same manner as in Example 1 except that the polypropylene core & polyethylene sheath conjugate fiber alone was used as the fiber to constitute the heat-seal layer in place of the mixed fibers comprised of synthetic pulp and the polypropylene core & polyethylene sheath conjugate fiber which was used in Example 2.

The obtained double layered paper was referred to tests for measuring its air permeability, heat-seal strength and hot tack. The test results are shown alongside in Table 1.

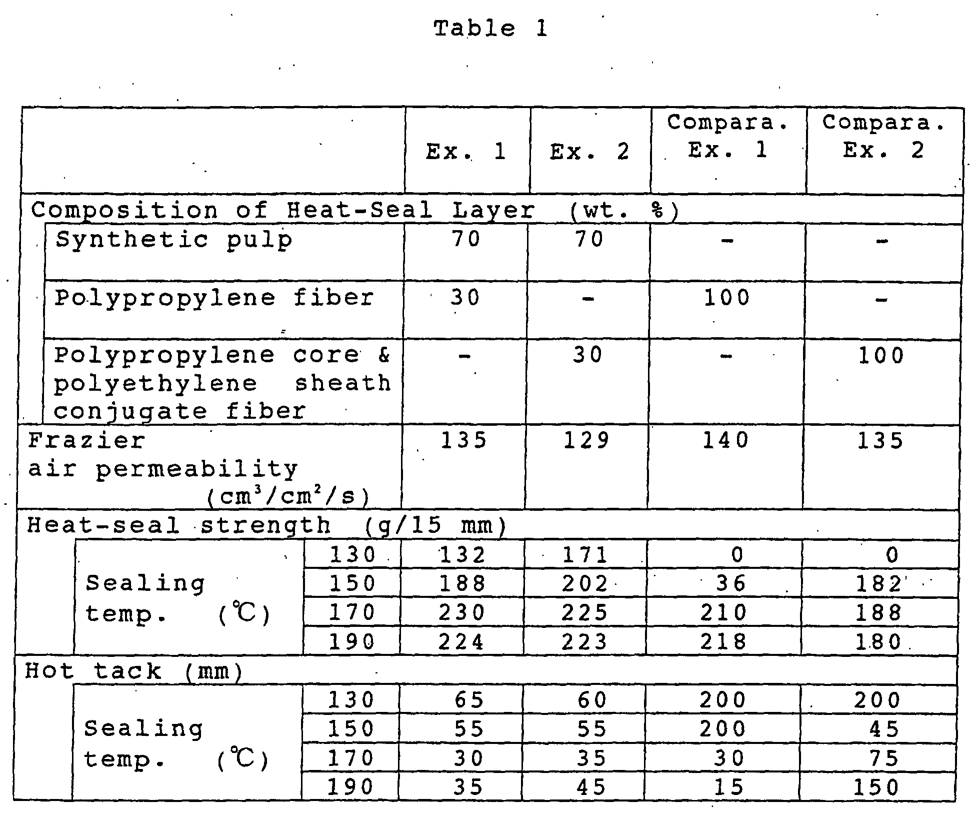

As can be clearly seen by comparison of the measured properties in Examples 1 and 2 and the measured properties in Comparative Examples 1 and 2, the obtained double layered paper exhibited good air permeability and at the same time the measured heat-seal strength was as high as 130 to 190°C. Besides, the peel distance which is the indicator of hot tack was small, thus was found that it possesses good hot tack.

### Industrial Applicability

The heat-seal paper of the present invention imparts a high interlayer bond strength between the heat-seal layer and the substrate layer, as well as strong bond among fibers, for the reason that the heat-seal layer comprises the polyolefin synthetic pulp having the branched configuration and preferably synthetic fiber, and also retains good air permeability. Since the heat-seal paper of the present invention possesses such heat-seal layer, it exhibits the stable and high degree of heat-sealability and hot tack over the wide temperature range extending from low temperatures to high temperatures, in particular good heat-sealability and hot tack at low temperatures.

This heat-seal paper having good air permeability may be utilized extensively and suitably as raw material paper for manufacturing various bags such as filter bags. This heat-seal paper may be used for tea bags, bags to package sterilized apparatus and tools with, desiccators bags, etc. In cases where this heat-seal paper is used on high-speed automatic bag-making machine, stable operation and high productivity may be secured on account of its own ability to be heat-sealable over the wide temperature range, which ability being attributed to freedom from possible adhesion to the hot plate in the molten state and good hot tack.

Furthermore, the heat-seal paper of the present invention possesses superior physical properties, such as air permeability, heat-sealability, and hot tack, compared with the heat-seal paper conventionally in use as the raw material paper for the tea bag manufacture. Moreover, it is principally comprised of polyolefin fiber, and hence there is few fear of generation of harmful substances like dioxines when incinerated as wastes. Hence, it contributes to protection of the environments.

## Claims

1. A heat-seal paper having air permeability, which comprises a laminated body integrating a heat-seal layer (A) principally comprised of a synthetic fiber having a branched configuration and a substrate layer (B) principally comprised of a natural fiber.

2. A heat-seal paper having air permeability according to claim 1, wherein said synthetic fiber having the branched configuration is a polyolefin synthetic pulp.

3. A heat-seal paper having air permeability according to claim 2, wherein said polyolefin synthetic pulp has an average fiber length of 0.1 to 10 mm and a freeness of 700 cc or less.

4. A heat-seal paper having air permeability according to claim 2 or 3, wherein said polyolefin synthetic pulp is constructed of a resin composition comprised of 50 to 100% by weight of an ethylene- α,β-unsaturated carboxylic acid copolymer containing 1 to 20% by weight of an α,β-unsaturated carboxylic acid and 0 to 50% by weight of a polyethylene resin.

5. A heat-seal paper having air permeability according to either one of claims 1 to 4, wherein said heat-seal layer (A) is comprised of 50 to 100% by weight of the polyolefin synthetic pulp and 0 to 50% by weight of at least one type of fiber selected from the group consisting of polyethylene fiber, polypropylene fiber, polyester fiber and conjugate fiber thereof.

6. A heat-seal paper having air permeability according to either one of claims 1 to 4, wherein said heat-seal layer (A) is comprised of 50 to 90% by weight of the polyolefin synthetic pulp and 10 to 50% by weight of at least one type selected from the group consisting of polyethylene fiber, polypropylene fiber, polyester fiber and conjugate fiber thereof.

7. A heat-seal paper having air permeability, which is a laminated body integrating a heat-seal layer (A) and a substrate layer (B) principally containing a natural fiber, wherein said heat-seal layer (A) is comprised of 1 to 99% by weight of a polyolefin synthetic pulp having a branched configuration and an average fiber length of 0.1 to 10 mm and 1 to 99% by weight of a synthetic fiber having a fineness of 0.1 to 10 deniers and an average fiber length of 0.1 to 30 mm, and said synthetic pulp is constructed of a resin composition comprised of 50 to 99% by weight of an ethylene-α,β-unsaturated carboxylic acid copolymer containing 1 to 20% by weight of an α,β-unsaturated carboxylic acid and 1 to 50% by weight of a polyethylene resin.

8. A heat-seal paper having air permeability according to claim 7, wherein said heat-seal layer (A) is comprised of 50 to 99% by weight of the polyolefin synthetic pulp and 1 to 50% by weight of the synthetic fiber.

9. A heat-seal paper having air permeability according to claim 7, wherein said heat-seal layer (A) is comprised of 50 to 90% by weight of the polyolefin synthetic pulp and 10 to 50% by weight of the synthetic fiber.

10. A heat-seal paper having air permeability according to either one of claims 7 to 9, wherein said synthetic fiber is at least one type of fiber selected from the group consisting of polyethylene fiber, polypropylene fiber, polyester fiber and conjugate fiber thereof.

11. A heat-seal paper having air permeability according to either one of claims 7 to 10, wherein said ethylene-α,β-unsaturated carboxylic acid copolymer is an ethylene -acrylic acid copolymer or an ethylene-methacrylic acid copolymer.

12. A heat-seal paper having air permeability according to either one of claims 7 to 11, wherein said polyethylene resin has a density of 0.941 to 0.970 (g/cm³) and a melt flow rate of 0.1 to 100 (g/10 min.).

13. A heat-seal paper having air permeability according to either one of claims 7 to 12, wherein said polyolefin synthetic pulp has a freeness of 700 cc or less.

14. A heat-seal paper having air permeability according to either one of claims 7 to 13, wherein said heat-seal layer (A) has a thickness corresponding to a grammage of 1 to 10 (g/m²).

15. A heat-seal paper having air permeability according to either one of claims 7 to 14, wherein said substrate layer (B) has a thickness corresponding to a grammage of 10 to 30 (g/m²).

16. A heat-seal paper having air permeability according to either one of claims 7 to 15, wherein said substrate layer (B) is comprised of an abaca pulp.

17. A heat-seal paper having air permeability according to either one of claims 7 to 16, wherein said laminated body is comprised of 15 to 30% by weight of the heat-seal layer (A) and 70 to 85% by weight of the substrate layer (B).

18. A heat-seal paper having air permeability according to either one of claims 7 to 17, wherein said laminated body has a thickness corresponding to a grammage of 11 to 40 (g/m²).

19. A heat-seal paper having air permeability according to either one of claims 7 to 18, wherein said laminated body has a Frazier air permeability of 100 to 300 (cm³/cm²/s).

20. A heat-seal paper having air permeability according to either one of claims 7 to 19, wherein said laminated body has a heat-seal strength at a temperature of 130°C of 100 to 300 (g/15 mm).

21. A heat-seal paper having air permeability according to either one of claims 7 to 20, wherein said laminated body has a hot tack as represented by a peel distance at a temperature of 130°C is 1 to 100 mm.

22. A heat-seal paper having air permeability according to either one of claims 7 to 21, wherein said laminated body is a filter bag paper.

23. A heat-seal paper having air permeability according to either one of claims 7 to 21, wherein said laminated body is a tea bag paper.

24. A heat-seal paper having air permeability according to either one of claims 7 to 23, wherein said heat-seal layer (A) and said substrate layer (B) constituting the laminated body do not substantially contain any halogen atom.
